# EUROPÄISCHE PATENTSCHRIFT

(11) **EP 2 336 210 B1**
(45) Veröffentlichungstag und Bekanntmachung des Hinweises auf die Patenterteilung: **12.03.2014**
(21) Anmeldenummer: 09179609.4
(22) Anmeldetag: 17.12.2009
(51) Int. Cl.: C08G 18/10, C08G 18/80, C08G 18/83, C09D 175/04, C09D 201/10, C09J 175/04, C09J 201/10, C08G 18/48, C08G 18/75

(54) **Silanfunktionelle Polymere, welche bei der Vernetzung kein Methanol abspalten**
Silane-functional polymer that does not liberate methanol upon cross-linking
Polymère comportant des fonctions silanes ne libérant pas de méthanol à la réticulation

(43) Veröffentlichungstag der Anmeldung: 22.06.2011
(73) Patentinhaber: Sika Technology AG, 6340 Baar (CH)
(72) Erfinder: Choffat, Fabien, 5600 Lenzburg (CH); Kramer, Andreas, 8006 Zürich (CH)
(74) Vertreter: Isler, Jörg

(56) Entgegenhaltungen:
- EP-A1- 1 746 133
- WO-A1-2006/053724

## Beschreibung

### Technisches Gebiet

Die vorliegende Erfindung betrifft das Gebiet der silanfunktionellen Polymere, wie sie in elastischen Klebstoffen, Dichtstoffen und Beschichtungen eingesetzt werden.

### Stand der Technik

Silanfunktionelle Polymere und deren Verwendung in Klebstoffen, Dichtstoffen oder Beschichtungen sind seit längerem bekannt und vielfach beschrieben. Als silanfunktionelle Polymere kommen dabei Polymere zum Einsatz, welche mit verschiedenen feuchtigkeitsreaktiven Silangruppen versehen sind. Wesentliches Kriterium für die Auswahl der Silangruppen ist dabei die Reaktivität dieser Gruppen. Durch die Reaktivität der Silangruppen wird schliesslich die Aushärtungsgeschwindigkeit der Zusammensetzung massgeblich beeinflusst.

Besonders gute Reaktivitäten werden bekanntermassen mit zwei Systemen erzielt. Das sind einerseits Zusammensetzungen auf Basis von Methoxysilan terminierten Polymeren, andererseits solche auf Basis von α -Silan terminierten Polymeren. Letztere sind wiederum besonders reaktiv, wenn sie Methoxygruppen aufweisen.

Der Nachteil des Einsatzes von Methoxysilan terminierten Polymeren ist, dass sie bei der Vernetzung mit Wasser Methanol freisetzen. Insbesondere beim Einsatz in Innenräumen ist die Freisetzung von Methanol problematisch, da Methanol und vor allem seine Metaboliten für den Menschen giftig sind und zu unerwünschten Wirkungen führen können.

Ein weiterer Nachteil von Methoxysilan terminierten Polymeren ist, dass sie bevorzugt mit Hilfe von organischen Zinnverbindungen ausgehärtet werden, welche wiederum aus ökologischen und toxikologischen Gründen nicht für jede Verwendungsart geeignet sind.

Der Nachteil von α-Silan terminierten Polymeren ist, dass sie sehr aufwendig herzustellen sind und somit kommerziell nicht verfügbar oder zu teuer sind.

WO 2006/053724 offenbart Zusammensetzungen, die für die Verwendung als Klebstoff, Dichtsoff oder Beschichtungen geeignet sind, und die silanterminierten Polymere enthalten. Zinnverbindungen werden aber zur Herstellung der Polymere benutzt.

EP 1 746 133 A1 offenbart Klebstoffzusammensetzungen auf Basis von silanterminierten Polymeren, die keine Zinnverbindungen benutzen. Die silanterminierten Polymere enthalten aber keine Endgruppen der Formel (I).

### Darstellung der Erfindung

Aufgabe der vorliegenden Erfindung ist es daher, silanfunktionelle Polymere für den Einsatz in Klebstoffen, Dichtstoffen und Beschichtungen zur Verfügung zu stellen, welche die Nachteile des Stands der Technik überwinden und ohne Zinn oder organische Zinnverbindungen und ohne die Freisetzung von Methanol vernetzen.

Überaschenderweise wurde nun gefunden, dass silanfunktionelle Polymere gemäss Anspruch 1 diese Aufgabe lösen.

Die erfindungsgemässen Polymere setzen bei deren Vernetzung kein Methanol frei, wodurch sie sich aus ökologischen und toxikologischen Gründen besonderes für den Einsatz in Klebstoffen, Dichtstoffen und Beschichtungen eignen. Weiterhin weisen die erfindungsgemässen Polymere den Vorteil auf, dass sie ohne den Einsatz von Zinn oder organischen Zinnverbindungen rasch und vollständig aushärten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Zusammensetzung, geeignet als Klebstoff, Dichtstoff oder Beschichtung, umfassend mindestens ein Polymer mit mindestens einer Endgruppe der Formel (I).

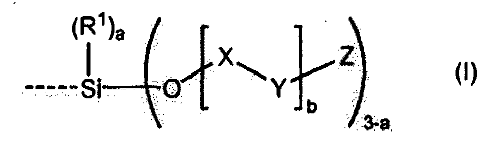

Dabei steht R¹ unabhängig voneinander für eine Alkoxygruppe mit 1 bis 12 C-Atomen oder für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist. Insbesondere steht R¹ für eine Methyl-oder für eine Ethylgruppe. Steht R¹ für eine Alkoxygruppe, handelt es sich dabei insbesondere um eine Alkoxygruppe mit 2 bis 8 C-Atomen, bevorzugt um eine Ethoxy- oder Isopropoxygruppe. R¹ ist meist bevorzugt keine Methoxygruppe, da es sonst bei der Vernetzung zu einer Methanolabspaltung kommt.

X steht unabhängig voneinander für einen linearen oder verzweigten zweiwertigen Kohlenwasserstoffrest mit 2 bis 4 C-Atomen, insbesondere für einen Ethylen- oder Methylethylenrest.

Y steht unabhängig voneinander für O, S oder N, insbesondere für O.

Z steht unabhängig voneinander für einen linearen oder verzweigten, einwertigen Kohlenwasserstoffrest mit 1 bis 12 C-Atomen, welcher gegebenenfalls eine oder mehrere C-C-Mehrfachbindungen und/oder gegebenenfalls cycloaliphatische und/oder aromatische Anteile aufweist. Insbesondere steht Z für einen Alkylrest mit 1 bis 6 C-Atomen, bevorzugt für einen Methyl-, Ethyl- oder Isopropylrest.

a steht für einen Wert von 0, 1 oder 2, insbesondere für 0 oder 1.

b steht für einen Wert von 1 bis 10, insbesondere für 1 bis 5 bevorzugt für 2 bis 3, dadurch gekennzeichnet, dass die Zusammensetzung weniger als 0.06 Gew.-%, insbesondere weniger als 0.01 Gew.-% Zinn oder organische Zinnverbindungen enthält und keine Bestandteile umfasst, welche bei der Aushärtung Methanol abspalten.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Die Begriffe "Organotitanat", "Organozirconat" und "Organoaluminat" bezeichnen im vorliegenden Dokument Verbindungen, welche mindestens einen über ein Sauerstoffatom an das Titan-, Zirconium- bzw. Aluminiumatom gebundenen Liganden aufweisen.

Als "mehrzähniger Ligand" bzw. "Chelatligand" wird im vorliegenden Dokument ein Ligand verstanden, welcher mindestens zwei freie Elektronenpaare besitzt und mindestens zwei Koordinationsstellen des Zentralatoms besetzen kann. Ein zweizähniger Ligand vermag es entsprechend zwei Koordinationsstellen eines Zentralatoms zu besetzen.

Unter der "Molekulargewicht" versteht man im vorliegenden Dokument stets das Molekulargewichtsmittel Mₙ (Zahlenmittel).

Bei der Endgruppe der Formel (I) im Polymer handelt es sich insbesondere um eine Endgruppe der Formel (II).

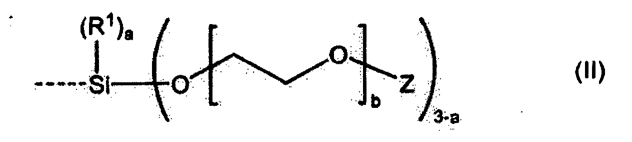

Dabei steht R¹ für einen Methyl-, Ethyl- oder Isopropylrest.

Z steht für einen Methyl-, Ethyl- oder Isopropylrest.

a steht für einen Wert von 0 oder 1 und b für einen Wert von 1 bis 5, bevorzugt für 2 bis 3.

Beim Polymer handelt es sich insbesondere um ein Polymer, welches ausgewählt ist aus der Gruppe bestehend aus einem Polyurethanpolymer, Polyether, Polyester und Polybutadien.

Bevorzugt handelt es sich beim Polymer um ein Polyurethanpolymer.

Die Herstellung eines bevorzugten silanfunktionellen Polyurethanpolymers erfolgt typischerweise durch die Umsetzung eines Silans mit einer Silangruppe gemäss Formel (I), welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer gänzlich frei von Isocyanatgruppen ist.

In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan AS der Formel (III).

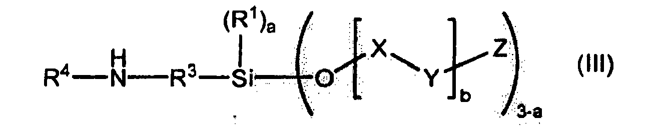

R¹, X, Y, Z sowie a und b sind bereits vorhergehend beschrieben worden.

Weiterhin steht R³ für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, insbesondere mit einem oder mehreren Stickstoffatomen.

R⁴ steht für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (IV).

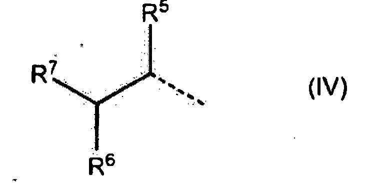

Dabei stehen die Reste R⁵ und R⁶ jeweils unabhängig voneinander für ein Wasserstoffatom oder für einen Rest aus der Gruppe bestehend aus -R⁸, -COOR⁸ und -CN.

Der Rest R⁷ steht für ein Wasserstoffatom oder für einen Rest aus der Gruppe bestehend aus -CH₂-COOR⁸, -COOR⁸, -CONHR⁸, -CON(R⁸)₂, -CN, -NO₂, -PO(OR⁸)₂, -SO₂R⁸ und -SO₂OR⁸.

Der Rest R⁸ steht für einen, gegebenenfalls mindestens ein Heteroatom aufweisenden, Kohlenwasserstoffrest mit 1 bis 20 C-Atomen.

Geeignete Aminosilane AS sind typischerweise erhältlich durch Umesterung eines aminofunktionellen Trialkoxysilans mit einem Alkohol der Formel (V).

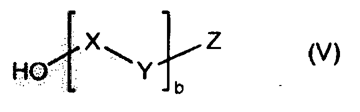

X, Y, Z und b sind bereits vorhergehend beschrieben worden.

Beispiele für geeignete aminofunktionelle Trialkoxysilane für die Umesterung mit einem Alkohol der Formel (V) sind primäre Aminosilane wie 3-Aminopropyltriethoxysilan, 3-Aminopropyldiethoxymethylsilan, sekundäre Aminosilane wie N-Butyl-3-aminopropyltriethoxysilan, N-Phenyl-3-aminopropyltriethoxysilan sowie die entsprechenden Methoxysilane.

Es ist dem Fachmann bekannt, dass bei der beschriebenen Umesterung nicht zwingend sämtliche Alkoxygruppen des aminofunktionellen Trialkoxysilans umgesetzt werden, sondern dass einzelne Alkoxygruppen des Trialkoxysilans im umgesetzten Aminosilan verbleiben können. Aus diesem Grund sind als aminofunktionelle Trialkoxysilane solche bevorzugt, welche keine Methoxysilangruppen aufweisen, da es ansonsten bei der Reaktion mit Wasser zu einer Abspaltung von Methanol kommt.

Besonders geeignete Aminosilane **AS** werden erhalten, wenn primäre Aminosilane wie 3-Aminopropyltriethoxysilan oder 3-Aminopropyldiethoxymethylsilan nach der beschriebenen Umesterung in einer nucleophilen Additionsreaktion an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Triethoxysilyl-propyl)-amino-bernsteinsäuredimethyl- und -diethylester, umgesetzt werden.

Als Aminosilane **AS** besonders geeignet sind sekundäre Aminosilane, insbesondere solche, bei denen R⁴ in Formel (III) verschieden von H ist. Bevorzugt sind die Michael-artigen Addukte, insbesondere solche, wie sie nach der Umesterung von 3-Aminopropyltriethoxysilan mit einem Alkohol der Formel (V) durch Reaktion mit Bernsteinsäurediethylester erhalten werden.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Aminosilane, eignen sich weiterhin insbesondere auch solche, wie sie erhältlich sind aus der Reaktion eines N-Aminoethyl-aminoalkyltrialkoxysilans, wobei die Alkoxy-Endgruppen in einer Umesterung mit mindestens einem Alkohol der Formel (V) umgesetzt wurden, mit einem Malein- oder Fumarsäurediester. Derartige geeignete Aminosilane, welche jedoch nicht einer beschriebenen Umesterung unterzogen wurden, sind beispielsweise beschrieben in WO 01/00632, dessen gesamte Offenbarung hiermit durch Bezugnahme eingeschlossen ist. Mit entsprechenden Aminosilanen (ebenfalls ohne Umesterung) hergestellte silanterminierte Polyurethanpolymere sind beispielsweise beschrieben in der europäischen Patentanmeldung mit der Anmeldenummer EP09153120.2, deren gesamte Offenbarung hiermit ebenfalls durch Bezugnahme eingeschlossen ist.

Als Isocyanatgruppen aufweisendes Polyurethanpolymer zur Herstellung eines silanfunktionellen Polyurethanpolymers eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Üblicherweise ist das silanfunktionelle Polymer in einer Menge von 10 bis 80 Gew.-%, insbesondere in einer Menge von 15 bis 70 Gew.-%, bevorzugt 20 bis 40 Gew.-%, bezogen auf die gesamte Zusammensetzung, vorhanden.

Die erfindungsgemässe Zusammensetzung umfasst weiterhin vorzugsweise einen Katalysator für die Vernetzung von silanfunktionellen Polymeren.

Insbesondere ist der Katalysator für die Vernetzung von silanfunktionellen Polymeren ausgewählt aus der Gruppe bestehend aus einem Organotitanat, einem Organozirconat und einem Organoaluminat.

Der Begriff "Katalysator" bezeichnet hierbei auch Vernetzer und vernetzend wirkende Substanzen welche in geringen Konzentrationen wirken.

In den dargestellten Formeln stellt die gestrichelte Linie die Bindung des Sauerstoffs zum Metall dar.

Geeignete Organotitanate, Organozirconate und Organoaluminate weisen Liganden auf, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können.

Als Alkoxygruppen haben sich insbesondere so genannte Neoalkoxy-Substituenten, insbesondere der Formel (VI), als besonders geeignet erwiesen.

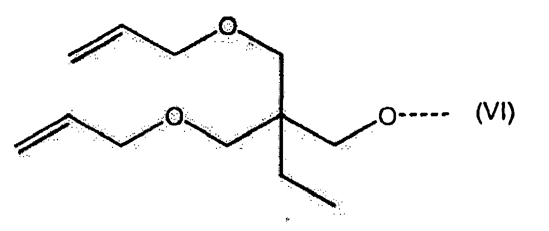

Als Sulfonsäuren haben sich insbesondere aromatische Sulfonsäuren, deren Aromaten mit einer Alkylgruppe substituiert sind, als besonders geeignet erwiesen. Als bevorzugte Sulfonsäuren gelten Reste der Formel (VII).

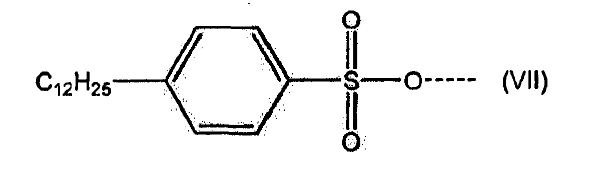

Besonders geeignet als Carboxylatgruppen sind insbesondere Carboxylate von Fettsäuren. Als bevorzugtes Carboxylat gelten Decanoat, Stearat und Isostearat.

Insbesondere weist der Katalysator für die Vernetzung von silanfunktionellen Polymeren mindestens einen mehrzähnigen Liganden, auch Chelatligand genannt, auf. Insbesondere ist der mehrzähnige Ligand ein zweizähniger Ligand.

Vorzugsweise handelt es sich beim zweizähnigen Liganden um einen Liganden der Formel (VIII).

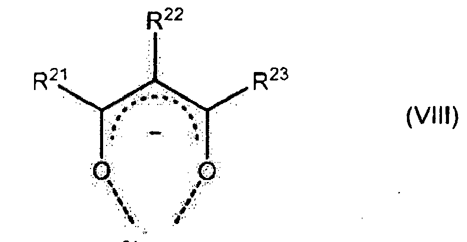

Dabei steht der Rest R²¹ für ein Wasserstoffatom oder für eine lineare oder verzweigte Alkylgruppe mit 1 bis 8 C-Atomen, insbesondere für eine Methylgruppe.

Der Rest R²² steht für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom.

Der Rest R²³ steht für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen.

Bevorzugt handelt es sich beim Katalysator für die Vernetzung von silanfunktionellen Polymeren um ein Organotitanat, insbesondere um ein Organotitanat der Formel (IX).

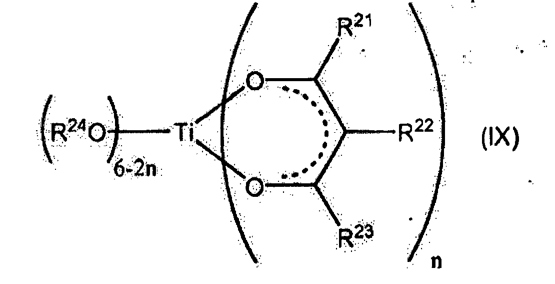

Die Reste R²¹, R²² und R²³ wurden bereits vorhergehend beschreiben.

Der Rest R²⁴ steht für einen linearen oder verzweigten Alkylrest mit 1 bis 20 C-Atomen, insbesondere mit 2 bis 12 C-Atomen, bevorzugt für einen Isobutyl- oder für einen Isopropylrest.

n steht für einen Wert von 1 oder 2, insbesondere für 2.

Bevorzugt sind Organotitanate der Formel (IX), wobei der Rest R²¹ für eine Methylgruppe, der Rest R²² für ein Wasserstoffatom, der Rest R²³ für eine Methylgruppe oder Methoxy- oder Ethoxygruppe und der Rest R²⁴ für einen Isobutyl- oder für einen Isopropylrest steht.

Organotitanate weisen den Vorteil auf, dass eine höhere Geschwindigkeit bei der Vernetzung erreicht werden kann.

Geeignete Organotitanate sind beispielsweise unter den Handelsnamen Tyzor^{®} AA, GBA, GBO, AA-75, AA-65, AA-105, DC, BEAT, IBAY kommerziell erhältlich von der Firma DuPont, USA, oder unter den Handelsnamen Tytan™ PBT, TET, X85, TAA, ET, S2, S4 oder S6 kommerziell erhältlich von TensoChema AG, Schweiz.

Organozirconate sind kommerziell erhältlich, beispielsweise bei der Firma Kenrich Petrochemicals. Geeignete Organozirconate sind beispielsweise Ken-React^{®} NZ 38J, NZ TPPJ, KZ OPPR, KZ TPP, NZ 01, NZ 09, NZ 12, NZ38, NZ 44, NZ 97. Weitere geeignete Organozirconate sind unter den Handelsnamen Snapcure™ 3020, 3030, 1020 kommerziell erhältlich von der Firma Johnson Matthey & Brandenberger AG, Schweiz.

Geeignete Organoaluminate sind beispielsweise kommerziell erhältlich unter dem Handelsnamen K-Kat^{®} 5218 von der Firma Worlée-Chemie GmbH, Deutschland.

Selbstverständlich ist es möglich oder in gewissen Fällen sogar bevorzugt, Mischungen verschiedener Katalysatoren einzusetzen.

Der Anteil des Katalysators beträgt vorzugsweise 0.1 bis 10 Gew.-%, insbesondere 0.2 bis 4 Gew.-%, bevorzugt 0.3 bis 3 Gew.-%, der gesamten Zusammensetzung.

Die erfindungsgemässe Zusammensetzung ist im Wesentlichen frei von Zinn oder organischen Zinnverbindungen und umfasst die Zusammensetzung weniger als 0.06 Gew.-%, insbesondere weniger als 0.01 Gew.-%, Zinn oder organische Zinnverbindungen. Bevorzugt enthält die Zusammensetzung kein Zinn und keine organischen Zinnverbindungen, wie sie typischerweise zur Aushärtung von Zusammensetzungen auf Basis von silanterminierten Polymeren eingesetzt werden. Zinnfreie Zusammensetzung weisen sowohl ökologische als auch toxikologische Vorteile auf.

Vorzugsweise weist die Zusammensetzung weiterhin einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte Zusammensetzung.

Weiterhin kann die erfindungsgemässe Zusammensetzung mindestens eine Verbindung enthalten, welche mindestens eine Amidinogruppe aufweist. Die Zugabe einer derartigen Verbindung ist zur Aushärtung der erfindungsgemässen Zusammensetzung nicht nötig, kann jedoch in gewissen Fällen angebracht sein. Insbesondere handelt es sich bei der Verbindung, welche mindestens eine Amidinogruppe aufweist, um eine Verbindung der Formel (X).

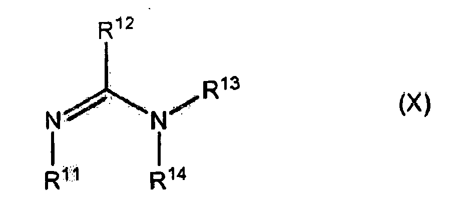

Dabei steht der Rest R¹¹ für ein Wasserstoffatom, für einen einwertigen Kohlenwasserstoffrest mit 1 bis 10 C-Atomen oder zusammen mit R¹⁴ für einen gegebenenfalls substituierten, zweiwertigen Kohlenwasserstoffrest mit 1 bis 10 C-Atomen.

Der Rest R¹² steht für ein Wasserstoffatom, für einen einwertigen Kohlenwasserstoffrest mit 1 bis 12 C-Atomen, gegebenenfalls mit cyclischen oder aromatischen Anteilen, und gegebenenfalls mit einem oder mehreren Heteroatomen, für eine Aminogruppe oder zusammen mit R¹³ für einen gegebenenfalls substituierten, zweiwertigen Kohlenwasserstoffrest mit 1 bis 10 C-Atomen.

Der Rest R¹³ steht für ein Wasserstoffatom, für einen einwertigen Kohlenwasserstoffrest mit 1 bis 12 C-Atomen, gegebenenfalls mit cyclischen oder aromatischen Anteilen, und gegebenenfalls mit einem oder mehreren Heteroatomen oder zusammen mit R¹² für einen gegebenenfalls substituierten, zweiwertigen Kohlenwasserstoffrest mit 1 bis 10 C-Atomen.

Der Rest R¹⁴ steht für ein Wasserstoffatom, für einen einwertigen Kohlenwasserstoffrest mit 1 bis 10 C-Atomen oder zusammen mit R¹¹ für einen gegebenenfalls substituierten, zweiwertigen Kohlenwasserstoffrest mit 1 bis 10 C-Atomen.

Beispielsweise handelt es sich beim Rest R¹² und/oder R¹³, welcher Heteroatome aufweist, um einen Alkylrest, der eine Silangruppe aufweist, wie etwa einem Alkyltrialkoxysilanrest, wobei die Silangruppe insbesondere keine Methoxygruppen aufweist.

Vorzugsweise ist die Verbindung, welche mindestens eine AmidinoGruppe aufweist, ein Guanidin, ein Imidazol, ein Imidazolin, ein bicyclisches Amidin oder ein Derivat dieser Verbindungen. Beispielsweise sind solche Derivate substituierte Imidazole oder Imidazoline, insbesondere eine Silangruppe aufweisende Imidazole oder Imidazoline, wobei die Silangruppe insbesondere keine Methoxygruppen aufweist.

Bevorzugte Verbindungen, welche mindestens eine Amidinogruppe aufweisen sind 1,8-Diazabicyclo[5.4.0]undec-7-en (DBU), 1,5-Diazabicyclo[4.3.0]non-5-en (DBN), 6-(Dibutylamino)-1,8-diazabicyclo[5.4.0]undec-7-en, Tetramethylguanidin, 2-Guanidinobenzimidazol, Acetylacetoneguanidin, 1,3-Di-o-tolylguanidin (DTG), 2-tert-Butyl-1,1,3,3-tetramethylguanidine oder N-(3-Triethoxysilylpropyl)-4,5-dihydroimidazol.

Enthält die Zusammensetzung eine Verbindung, welche mindestens eine Amidinogruppe aufweist, so beträgt ihr Anteil vorzugsweise 0.05 bis 3 Gew.-%, insbesondere 0.1 bis 2 Gew.-%, bevorzugt 0.1 bis 1 Gew.-%, der gesamten Zusammensetzung.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltriethoxysilan, α-funktionelle Silane wie N-(Silylmethyl)-O-methyl-carbamate, insbesondere N-(Methyldiethoxysilylmethyl)-O-methyl-carbamat, (Methacryloxymethyl)silane, Ethoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Die erfindungsgemässe Zusammensetzung umfasst keine Bestandteile, welche bei der Aushärtung Methanol abspalten. Derartige Bestandteile sind neben dem silanfunktionellen Polymer gegebenenfalls vorhandene reaktive Bestandteile wie beispielsweise Haftvermittler, Trocknungsmittel, Reaktivverdünner, Vernetzer und andere vorhergehend beschriebene Bestandteile.

Bestandteile, welche bei der Aushärtung Methanol abspalten, sind typischerweise Methoxygruppen aufweisende, silanfunktionelle Verbindungen. Insbesondere umfasst also die erfindungsgemässe Zusammensetzung keine silanfunktionellen Verbindungen, welche Methoxysilangruppen aufweisen. Bevorzugt weisen sämtliche in der Zusammensetzung vorhandene silanfunktionelle Verbindungen als Endgruppen Ethoxy- oder Isopropoxygruppen auf oder Endgruppen der Formel (I), wobei die Reste R¹, R² und R³ sowie der Index a bereits vorhergehen beschreiben worden sind.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation der beschriebenen Zusammensetzung auf mindestens einen Festkörper oder Artikel kommen die in der Zusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die beispielsweise über einen Statikmischer eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchtigkeit und der Klebegeometrie, bestimmt und verlangsamt sich in der Regel mit dem Fortschreiten der Aushärtung.

Weiterhin umfasst die vorliegende Erfindung die Verwendung einer vorhergehend beschriebenen Zusammensetzung als Klebstoff, Dichtstoff oder Beschichtung.

Die erfindungsgemässe Zusammensetzung wird insbesondere verwendet in einem Verfahren des Verklebens zweier Substrate **S1** und **S2** umfassend die Schritte
i) Applikation einer Zusammensetzung gemäss vorhergehender Beschreibung auf ein Substrat **S1** und/oder ein Substrat **S2;**
ii) Kontaktieren der Substrate **S1** und **S2** über die applizierte Zusammensetzung innerhalb der Offenzeit der Zusammensetzung;
iii) Aushärtung der Zusammensetzung mittels Wasser;
wobei die Substrate **S1** und **S2** gleich oder verschieden voneinander sind.

Weiterhin kann die erfindungsgemässe Zusammensetzung auch verwendet werden in einem Verfahren der Abdichtung oder des Beschichtens umfassend die Schritte
i') Applikation einer Zusammensetzung gemäss vorhergehender Beschreibung auf ein Substrat **S1** und/oder zwischen zwei Substrate **S1** und **S2;**
ii') Aushärtung der Zusammensetzung mittels Wasser, insbesondere in der Form von Luftfeuchtigkeit;
wobei die Substrate **S1** und **S2** gleich oder verschieden voneinander sind.

Als Substrate **S1** und/oder **S2** eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Weiterhin betrifft die Erfindung eine gehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit.

Bei den Artikeln, welche mit einer erfindungsgemässen Zusammensetzung verklebt, abgedichtet oder beschichtet werden, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Hautbildungszeit** (Zeit bis zur Klebefreiheit, "tack-free time") wurde bei 23 °C und 50 % relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels einer Pipette aus LDPE erstmals keine Rückstände auf der Pipette mehr zurückblieben.

Die **Zugfestigkeit,** die **Bruchdehnung,** und der **Elastizitätsmodul** (E-Modul) bei 0 bis 100 % Dehnung wurden nach DIN EN 53504 (Zuggeschwindigkeit: 200 mm/min) an während 7 Tagen bei 23 °C und 50 % relativer Luftfeuchtigkeit ausgehärteten Filmen mit einer Schichtdicke von 2 mm bestimmt.

Der **Weiterreisswiderstand** wurde bestimmt nach DIN 53515, an während 7 Tagen bei 23 °C und 50 % relativer Luftfeuchtigkeit ausgehärteten Filmen mit einer Schichtdicke von 2 mm.

Die **Shore A-Härte** wurde bestimmt nach DIN 53505, an während 7 Tagen bei 23 °C und 50 % relativer Luftfeuchtigkeit ausgehärteten Probekörpern mit einer Schichtdicke von 6 mm.

### Herstellung der silanfunktionellen Polyurethanpolymere

Es wurde ein silanfunktionelles Polyurethanpolymer mit 3,6-Dioxaheptoxy-Endgruppen ***P-PEG*** und eines mit Heptoxy-Endgruppen ***P-HeptO*** wie folgt hergestellt:

Unter Stickstoffatmosphäre wurden 700 g Polyol Acclaim^{®} 12200 (Bayer MaterialScience AG, Deutschland; low monol Polyoxypropylendiol; OH-Zahl 11.0 mg KOH/g; Wassergehalt ca. 0.02 Gew.-%), 32.1 g Isophorondiisocyanat (Vestanat^{®} IPDI, Evonik Degussa GmbH, Deutschland), 85.4 g 2,2,4-Trimethyl-1,3-pentandioldiisobutyrat (Eastman TXIB™; Eastman Chemical Company, USA) und 0.2 g Tyzor^{®} IBAY (von DuPont, USA) unter stetigem Rühren auf 90 °C aufgeheizt und bei dieser Temperatur belassen. Nach einer Stunde Reaktionszeit wurde mittels Titration ein freier Gehalt an Isocyanatgruppen von 0.7 Gew.-% erreicht. Anschliessend wurden 0.14 mol (entspricht einer stöchiometrischen Umsetzung der NCO-Gruppen mit Silan) reaktives Silan **(*Int-PEG*** bzw. ***Int-HeptO*)** beigefügt und für weitere 2 bis 3 Stunden bei 90 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23 °C) abgekühlt und unter Ausschluss von Feuchtigkeit aufbewahrt (theoretischer Polymergehalt = 90%).

Das reaktive Silan ***Int-PEG*** (3-Aminopropyltri(3,6-dioxa-heptoxy)silan) wurde wie folgt hergestellt: 50 g 3-Aminopropyltriethoxysilan (Dynasylan^{®} AMEO von Evonik Degussa GmbH, Deutschland) wurden zusammen mit 0.3 g Wasser während 15 Minuten bei 100°C in einem Rundkolben mit Rückflusskühler gerührt. Danach wurden 100.5 g Methyldiglykol zugegeben und während 20 Stunden bei 100 °C und 250 mbar am Rotationsverdampfer gerührt. Anschliessend wurde die Temperatur auf 120 °C erhöht und es wurden jeweils drei Mal 0.3 g Wasser zugegeben wobei jeweils 15 Minuten bei 120 °C und Normaldruck und jeweils 30 Minuten bei gleicher Temperatur und einem Druck von 15 mbar weitergerührt wurde. Schliesslich wurde das Rohprodukt in eine Glasflasche gefüllt und mit Argon überschichtet.

Es wurden 110.5 g einer praktisch farblosen Flüssigkeit mit einer Aminzahl von 133.3 mg KOH/g (theor. 126.5 mg KOH/g bei vollständigem Umsatz) erhalten.

Das hergestellte Rohprodukt wurde dann vorgelegt und unter gutem Rühren bei Raumtemperatur wurde langsam 45.2 g Maleinsäure-diethylester (Fluka Chemie GmbH, Schweiz) zugegeben und die Mischung während 12 Stunden bei 60 °C gerührt.

Das reaktive Silan ***Int-HeptO*** wurde wie folgt hergestellt: 50 g 3-Aminopropyltriethoxysilan (Dynasylan^{®} AMEO), 1.0 g Ionentauscher (Lewatit^{®} MP 62 von Lanxess AG, Deutschland), 0.5 g Wasser und 50 mg Tyzor^{®} IBAY wurden in einen mit einem Rückflusskühler ausgestatteten 250 ml Rundkolben eingewogen, danach wurde 30 Minuten bei 80 °C gerührt. Anschliessend wurden 83.35 g Heptanol zugegeben, es wurde kurz homogenisiert und der Ionentauscher wurde abfiltriert. Das Reaktionsgemisch wurde während ca. 30 Stunden weitergerührt, wobei eine schrittweise Erhöhung der Temperatur von 120 °C auf 140 °C und eine Reduktion des Drucks von Normaldruck zu 300 mbar erfolgte. Während der Reaktion wurden etwa 16 ml Ethanol abgeschieden. Nach Abbruch der Reaktion wurde das Rohprodukt während 1 Stunde am Rotationsverdampfer bei 135 °C und 10 mbar eingeengt, in eine Glasflasche abgefüllt und mit Argon überschichtet.

Es wurden 72.5 g einer praktisch farblosen Flüssigkeit mit einer Aminzahl von 167.0 mg KOH/g (theor. 130.0 mg KOH/g bei vollständigem Umsatz) erhalten.

Das hergestellte Rohprodukt wurde dann vorgelegt und unter gutem Rühren bei Raumtemperatur wurde langsam 37.2 g Maleinsäure-diethylester (Fluka Chemie GmbH, Schweiz) zugegeben und die Mischung während 12 Stunden bei 60 °C gerührt.

### Herstellung des Thixotropierungsmittels TM

In einem Vakuummischer wurden 1000 g Diisodecylphthalat (DIDP, Palatinol^{®} Z, BASF SE, Deutschland) und 160 g 4,4'-Diphenylmethandiisocyanat (Desmodur^{®} 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel **TM** enthält 20 Gew.-% Thixotropierungsmittel in 80 Gew.-% Diisodecylphthalat.

### Herstellung der Klebstoffe

In einem Vakuummischer wurden entsprechend den in Tabelle 1 angegebenen Gewichtsteilen ein silanfunktionelles Polymer (**P-PEG** bzw. ***P-HeptO***), DIDP, Thixotropierungsmittel **TM** und Methyltriethoxysilan (Dynasylan^{®} MTES von Evonik Degussa GmbH, Deutschland) während 5 Minuten gut vermischt. Anschliessend wurde getrocknete, gefällte Kreide (Socal^{®} U1S2, Solvay SA, Belgien) und Aerosil^{®} 200 (von Evonik Degussa GmbH) während 15 Minuten bei 60 °C eingeknetet. Bei ausgeschalteter Heizung wurden anschliessend 3-Aminopropyltriethoxysilan (Dynasylan^{®} AMEO) und Katalysator unter Vakuum während 10 Minuten zu einer homogenen Paste verarbeitet. Diese wurde dann in innenlackierte Aluminium-Spreizkolbenkartuschen abgefüllt.

**Tabelle 1 Klebstoffzusammensetzungen in Gewichtsteilen und Resultate**

| | ***1*** | ***2*** | ***3*** | ***4*** |
|---|---|---|---|---|
| ***P-PEG*** | 35 | 35 | | |
| ***P-HeptO*** | | | 35 | 35 |
| DIDP | 5 | 5 | 5 | 5 |
| ***TM*** | 10 | 10 | 10 | 10 |
| Dynasylan^{®} MTES | 2 | 2 | 2 | 2 |
| Socal^{®} U 1 S2 | 49 | 49 | 49 | 49 |
| Aerosil^{®} 200 | 3 | 3 | 3 | 3 |
| Dynasylan^{®} AMEO | 1 | 1 | 1 | 1 |
| Tyzor^{®} IBAY | 1 | | 1 | 1 |
| Metatin^{®} K712 ^{a)} | | 1 | | 1 |
| | | | | |
| Hautbildungszeit [min] | 90 | n.b.*⁾ | n.b. | n.b. |
| Zugfestigkeit [MPa] | 0.8 | n.b.*⁾ | n.b. | n.b. |
| Bruchdehnung [%] | 340 | n.b.*⁾ | n.b. | n.b. |
| Weiterreisswiderstand [N/mm] | 5 | n.b.*⁾ | n.b. | n.b. |
| E-Modul 0-100% [MPa] | 0.3 | n.b.*⁾ | n.b. | n.b. |
| Shore A | 21 | n.b.*⁾ | n.b. | n.b. |

| | | | | |
|---|---|---|---|---|
| ^{a)} 10 %-ige Lösung in DIDP; n.b.: nicht bestimmt, da nach einer Woche nicht ausgehärtet; n.b.*⁾: nicht bestimmt, da in der Kartusche nach einem Tag schon ausgehärtet. | | | | |

## Patentansprüche

1. Zusammensetzung, geeignet als Klebstoff, Dichtstoff oder Beschichtung, umfassend mindestens ein Polymer mit mindestens einer Endgruppe der Formel (I) 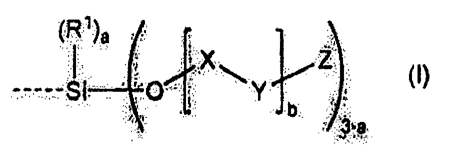 wobei
R¹ unabhängig voneinander für eine Alkoxygruppe mit 1 bis 12 C-Atomen oder für einen linearen oder verzweigten, einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist;
X unabhängig voneinander für einen linearen oder verzweigten zweiwertigen Kohlenwasserstoffrest mit 2 bis 4 C-Atomen steht;
Y unabhängig voneinander für O, S oder N steht;
Z unabhängig voneinander für einen linearen oder verzweigten,
einwertigen Kohlenwasserstoffrest mit 1 bis 12 C-Atomen steht, welcher gegebenenfalls eine oder mehrere C-C-Mehrfachbindungen und/oder gegebenenfalls cycloaliphatische und/oder aromatische Anteile aufweist; a für einen Wert von 0, 1 oder 2 steht; und
b für einen Wert von 1 bis 10 steht,
**dadurch gekennzeichnet, dass** die Zusammensetzung weniger als 0.06 Gew.-%, insbesondere weniger als 0.01 Gew.-%, Zinn oder organische Zinnverbindungen enthält und keine Bestandteile umfasst, welche bei der Aushärtung Methanol abspalten.

2. Zusammensetzung gemäss Anspruch 1, **dadurch gekennzeichnet, dass** Y für O steht.

3. Zusammensetzung gemäss einem der vorhergehenden Ansprüche, **dadurch gekennzeichnet, dass** X für einen Ethlylen- oder Methylethylenrest steht.

4. Zusammensetzung gemäss Anspruch 1, **dadurch gekennzeichnet, dass** die Endgruppe der Formel (I) eine Endgruppe der Formel (11) ist 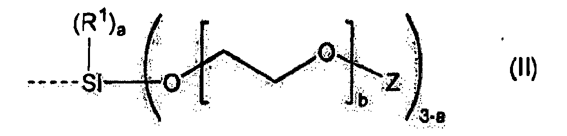 wobei
R¹ für einen Methyl-, Ethyl- oder Isopropylrest steht;
Z für einen Methyl-, Ethyl- oder Isopropylrest steht;
a für einen Wert von 0 oder 1 steht; und
b für einen Wert von 1 bis 5 steht.

5. Zusammensetzung gemäss einem der vorhergehenden Ansprüche, **dadurch gekennzeichnet, dass** das Polymer ausgewählt ist aus der Gruppe bestehend aus einem Polyurethanpolymer, Polyether, Polyester und Polybutadien ist.

6. Zusammensetzung gemäss Anspruch 5, **dadurch gekennzeichnet, dass** das Polymer ein Polyurethanpolymer ist.

7. Zusammensetzung gemäss einem der vorhergehenden Ansprüche, **dadurch gekennzeichnet, dass** die Zusammensetzung zusätzlich mindestens einen Katalysator für die Vernetzung von silanfunktionellen Polymeren umfasst.

8. Zusammensetzung gemäss Anspruch 7, **dadurch gekennzeichnet, dass** der Katalysator für die Vernetzung von silanfunktionellen Polymeren, ausgewählt ist aus der Gruppe bestehend aus einem Organotitanat, einem Organozirconat und einem Organoaluminat.

9. Zusammensetzung gemäss Anspruch 8, **dadurch gekennzeichnet, dass** der Katalysator für die Vernetzung von silanfunktionellen Polymeren ein Organotitanat ist.

10. Zusammensetzung gemäss Anspruch 9, **dadurch gekennzeichnet, dass** das Organotitanat ein Organotitanat der Formel (IX) ist 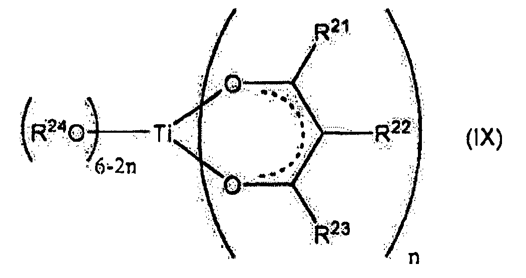 wobei
R²¹ für ein Wasserstoffatom oder für eine lineare oder verzweigte Alkylgruppe mit 1 bis 8 C-Atomen steht;
R²² für ein Wasserstoffatom oder für eine lineare oder verzweigte Alkylgruppe mit 1 bis 8 C-Atomen, welche gegebenenfalls Heteroatome aufweist, steht;
R²³ für ein Wasserstoffatom oder für eine Alkylgruppe mit 1 bis 8 C-Atomen oder für eine lineare oder verzweigte Alkoxygruppe mit 1 bis 8 C-Atomen, steht;
R²⁴ für einen linearen oder verzweigten Alkylrest mit 1 bis 20 C-Atomen steht; und
n für einen Wert von 1 oder 2 steht.

11. Zusammensetzung gemäss einem der Ansprüche 7 bis 10, **dadurch gekennzeichnet, dass** der Anteil des Katalysators 0.1 bis 10 Gew.-% der gesamten Zusammensetzung beträgt.

12. Verwendung einer Zusammensetzung gemäss einem der Ansprüche 1 bis 11 als Klebstoff, Dichtstoff oder Beschichtung.

## Claims

1. Composition suitable as an adhesive, sealant or coating, comprising at least one polymer having at least one terminal group of formula (I) 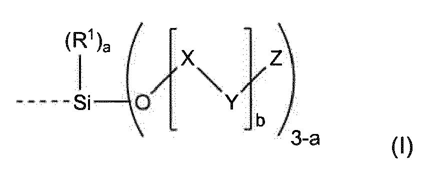
R¹ independently of one another denoting an alkoxy group having 1 to 12 C atoms or a linear or branched monovalent hydrocarbon group having 1 to 12 C atoms which optionally comprises one or more C-C multiple bonds and/or optionally cycloaliphatic and/or aromatic components;
X independently of one another denoting a linear or branched divalent hydrocarbon group having 2 to 4 C atoms;
Y independently of one another denoting O, S or N;
Z independently of one another denoting a linear or branched monovalent hydrocarbon group having 1 to 12 C atoms, which optionally comprises one or more C-C multiple bonds and/or optionally cycloaliphatic and/or aromatic components;
a denoting a value of 0, 1 or 2; and
b denoting a value of 1 to 10,
**characterised in that** the composition contains less than 0.06 % by weight, particularly less than 0.01 % by weight, of tin or organic tin compounds and does not contain any constituents that release methanol on curing.

2. Composition according to claim 1, **characterised in that** Y denotes O.

3. Composition according to any of the preceding claims, **characterised in that** X denotes an ethylene or methylethylene group.

4. Composition according to claim 1, **characterised in that** the terminal group of formula (I) is a terminal group of formula (II) 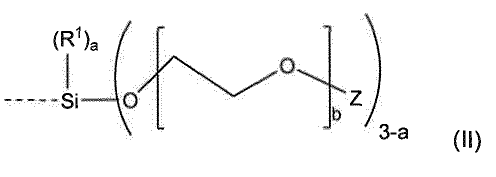
R¹ denoting a methyl, ethyl or isopropyl group;
Z denoting a methyl, ethyl or isopropyl group;
a denoting a value of 0 or 1; and
b denoting a value of 1 to 5.

5. Composition according to any of the preceding claims, **characterised in that** the polymer is selected from among a polyurethane polymer, polyether, polyester and polybutadiene.

6. Composition according to claim 5, **characterised in that** the polymer is a polyurethane polymer.

7. Composition according to any of the preceding claims, **characterised in that** the composition additionally comprises at least one catalyst for the cross-linking of silane functional polymers.

8. Composition according to claim 7, **characterised in that** the catalyst for the cross-linking of silane functional polymers is selected from among an organotitanate, an organozirconate and an organoaluminate.

9. Composition according to claim 8, **characterised in that** the catalyst for the cross-linking of silane functional polymers is an organotitanate.

10. Composition according to claim 9, **characterised in that** the organotitanate is an organotitanate of formula (IX) 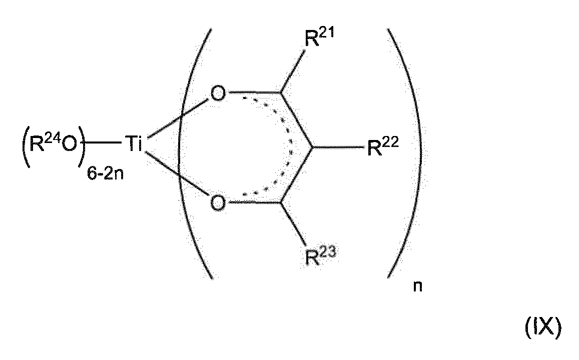
R²¹ denoting a hydrogen atom or a linear or branched alkyl group having 1 to 8 C atoms;
R²² denoting a hydrogen atom or a linear or branched alkyl group having 1 to 8 C atoms which optionally comprises heteroatoms;
R²³ denoting a hydrogen atom or an alkyl group having 1 to 8 C atoms or a linear or branched alkoxy group having 1 to 8 C atoms;
R²⁴ denoting a linear or branched alkyl group having 1 to 20 C atoms; and
n denoting a value of 1 or 2.

11. Composition according to any of claims 7 to 10, **characterised in that** the catalyst content in the composition as a whole amounts to 0.1 to 10 % by weight.

12. Use of a composition according to any of claims 1 to 11 as an adhesive, sealant or coating.

## Revendications

1. Composition convenant comme adhésif, matériau d'étanchéité ou revêtement, comprenant au moins un polymère avec au moins un groupement terminal de formule (I) : 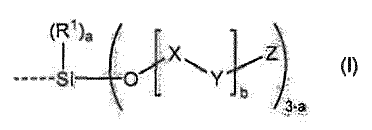 dans laquelle :
les groupements R¹ désignent, indépendamment l'un de l'autre, un groupement alcoxy ayant 1 à 12 atomes de carbone ou un radical hydrocarboné monovalent linéaire ou ramifié avec 1 à 12 atomes de carbone, qui présente éventuellement une ou plusieurs liaisons multiples C-C et/ou éventuellement des fractions cycloaliphatiques et/ou aromatiques ;
les groupements X représentent, indépendamment l'un de l'autre, un radical hydrocarboné bivalent linéaire ou ramifié avec 2 à 4 atomes de carbone ;
les groupements Y représentent, indépendamment l'un de l'autre, O, S ou N ;
les groupements Z représentent, indépendamment l'un de l'autre, un radical hydrocarboné monovalent linéaire ou ramifié avec 1 à 12 atomes de carbone, qui présente éventuellement une ou plusieurs liaisons multiples C-C et/ou éventuellement des fractions cycloaliphatiques et/ou aromatiques ;
a indique une valeur de 0, 1 ou 2 ; et
b indique une valeur de 1 à 10,
**caractérisée en ce que** la composition contient moins de 0,06 % en poids, en particulier moins de 0,01 % en poids, d'étain ou de composés organiques d'étain et ne contient pas de composants qui libèrent du méthanol lors du durcissement.

2. Composition selon la revendication 1, **caractérisée en ce que** Y désigne O.

3. Composition selon l'une quelconque des revendications précédentes, **caractérisée en ce que** X désigne un radical éthylène ou méthyléthylène.

4. Composition selon la revendication 1, **caractérisée en ce que** le groupement terminal de formule (I) est un groupement terminal de formule (II) : 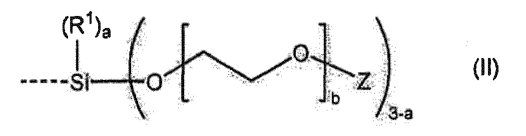 dans laquelle :
R¹ désigne un radical méthyle, éthyle ou isopropyle ;
Z désigne un radical méthyle, éthyle ou isopropyle ;
a indique une valeur de 0 ou 1 ; et
b indique une valeur de 1 à 5.

5. Composition selon l'une quelconque des revendications précédentes, **caractérisée en ce que** le polymère est choisi dans le groupe constitué d'un polymère de polyuréthane, d'un polyéther, d'un polyester et d'un polybutadiène.

6. Composition selon la revendication 5, **caractérisée en ce que** le polymère est un polymère de polyuréthane.

7. Composition selon l'une quelconque des revendications précédentes, **caractérisée en ce que** la composition comprend en outre au moins un catalyseur pour la réticulation de polymères à fonctions silane.

8. Composition selon la revendication 7, **caractérisée en ce que** le catalyseur pour la réticulation de polymères à fonctions silane est choisi dans le groupe constitué d'un organotitanate, d'un organozirconate et d'un organoaluminate.

9. Composition selon la revendication 8, **caractérisée en ce que** le catalyseur pour la réticulation de polymères à fonctions silane est un organotitanate.

10. Composition selon la revendication 9, **caractérisée en ce que** l'organotitanate est un organotitanate de formule (IX) : 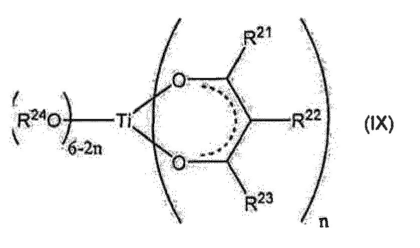 dans laquelle :
R²¹ désigne un atome d'hydrogène ou un groupement alkyle linéaire ou ramifié avec 1 à 8 atomes de carbone ;
R²² désigne un atome d'hydrogène ou un groupement alkyle linéaire ou ramifié avec 1 à 8 atomes de carbone, qui présente éventuellement des hétéroatomes ;
R²³ désigne un atome d'hydrogène ou un groupement alkyle avec 1 à 8 atomes de carbone ou un groupement alcoxy linéaire ou ramifié avec 1 à 8 atomes de carbone ;
R²⁴ désigne un radical alkyle linéaire ou ramifié avec 1 à 20 atomes de carbone ; et
n indique une valeur de 1 ou 2.

11. Composition selon l'une quelconque des revendications 7 à 10, **caractérisée en ce que** la fraction du catalyseur atteint 0,1 à 10 % en poids de la composition totale.

12. Utilisation d'une composition selon l'une quelconque des revendications 1 à 11 comme adhésif, matériau d'étanchéité ou revêtement.
